# EUROPEAN PATENT APPLICATION

(11) **EP 4 836 512 A1**
(43) Date of publication of application: **04.11.2026**
(21) Application number: 24912894.3
(22) Date of filing: 25.12.2024
(51) Int. Cl.: H04W 28/084, H04L 41/0895, H04W 36/14, H04W 92/24

(54) **COMMUNICATION DEVICE, COMMUNICATION METHOD, TERMINAL, AND COMMUNICATION SYSTEM**

(30) Priority: 27.12.2023 JP 2023220630
(71) Applicant: TOYOTA JIDOSHA KABUSHIKI KAISHA, Toyota-Shi, Aichi-Ken 471-8571 (JP)
(72) Inventor: SHAO Xiao, Toyota-shi Aichi 471-8571 (JP); ZHONG Lei, Toyota-shi Aichi 471-8571 (JP); MA Jing, Toyota-shi Aichi 471-8571 (JP); HIGUCHI Takamasa, Toyota-shi Aichi 471-8571 (JP)
(74) Representative: Simmons & Simmons
(86) International application number: PCT/JP2024/045871
(87) International publication number: WO 2025/143008

(57) **Abstract**

To appropriately perform communication when utilizing network slices. A communication apparatus according to one aspect of the present disclosure communicates with a terminal, and includes a control unit that determines whether a condition for switching a logical network between the terminal and the communication apparatus is met, and a communication unit that, when the condition is met, transmits, to a second communication apparatus for exposing a network function (NF) of a physical network corresponding to the logical network to external entities, an instruction to switch the logical network to another logical network.

## Description

### Technical Field

The present disclosure relates to a communication apparatus, a communication method, a terminal, and a communication system in a mobile communication system.

### Background Art

In the standards for a 5th Generation Mobile Communication System (5G) defined by the 3rd Generation Partnership Project (3GPP (Registered Trademark)), which is a standardization project for mobile communication systems, a Network Exposure Function (NEF) for exposing a Network Function (NF) of a core network to external entities is specified (e.g., Non Patent Literature 1 and Non Patent Literature 2).

### Citation List

### Non Patent Literature

[Non Patent Literature 1] 3GPP TS 23.501 V18.3.0 (2023-09) "System architecture for the 5G System (5GS); Stage 2 (Release 18)"
[Non Patent Literature 2] 3GPP TS 23.502 V18.3.0 (2023-09) "Procedures for the 5G System (5GS); Stage 2 (Release 18)"

### Summary of Invention

### Technical Problem

In the 3GPP standards, network slices, which define virtual networks for individual users within the physical network, are also specified.

However, in the current 3GPP standards, a service provider's application that communicates with user equipment (UE) cannot directly select the network slice for the UE's communication from outside the core network, even via the NEF. If the application cannot dynamically specify a network slice, there is a risk that the quality of communication between the UE and the application deteriorates, communication throughput decreases, or overall system throughput cannot be improved. In this case, it may become difficult for the service provider to provide appropriate services.

Therefore, one object of the present disclosure is to provide a communication apparatus, a communication method, a terminal, and a communication system capable of appropriately performing communication when utilizing network slices.

### Solution to Problem

A communication apparatus according to one aspect of the present disclosure is a communication apparatus that communicates with a terminal, and includes: a control unit that determines whether a condition for switching a logical network between the terminal and the communication apparatus is met; and a communication unit that, when the condition is met, transmits, to a second communication apparatus for exposing a network function (NF) of a physical network corresponding to the logical network to external entities, an instruction to switch the logical network to another logical network.

### Advantageous Effects of Invention

According to one aspect of the present disclosure, it is possible to perform communication appropriately when utilizing network slices.

### Brief Description of Drawings

Fig. 1 is a diagram showing an example of a schematic configuration of a system according to one embodiment of the present disclosure.
Fig. 2 is a diagram showing an example of a schematic functional configuration of each apparatus according to one embodiment of the present disclosure.
Fig. 3 is a diagram showing an example of a schematic hardware configuration of each apparatus according to one embodiment of the present disclosure.
Fig. 4 is a diagram showing an example of slice switching triggered by an instruction from an application according to one embodiment of the present disclosure.
Fig. 5 is a diagram showing an example of a first control flow of the slice switching according to one embodiment of the present disclosure.
Fig. 6 is a diagram showing an example of a second control flow of the slice switching according to one embodiment of the present disclosure.

### Description of Embodiments

Hereinafter, an embodiment of the present disclosure will be described in detail with reference to the drawings. Note that in the specification and the drawings, repeated description of elements that can be described in the same manner may be omitted by assigning the same reference signs thereto.

In the present disclosure, a term enclosed in parentheses within a sentence may indicate an explanation (e.g., spelling explanation) of the immediately preceding term, a rephrasing, a specific example, a supplemental explanation, or the like. In addition, in the present disclosure, regarding a term enclosed by "[]" in a sentence, the meaning of the entire sentence including the term may be interpreted as including the term, or may be interpreted without including the term (ignoring it). Note that "()" and "[]" may also be used for purposes or meanings other than those.

In the present disclosure, "A/B" and "at least one of A or B" may be used interchangeably. Furthermore, in the present disclosure, "A/B/C" may mean "at least one of A, B, or C".

### <Problem Analysis>

In the 3GPP standards, network slices (hereinafter, also referred to simply as "slices") that define virtual networks for respective users within a physical network are also specified. Specifically, a slice is defined as a logical network that provides specific network capabilities and network characteristics.

In Release 18 (Rel. 18) of the current 3GPP standards, slice replacement has been introduced. For example, a plurality of slices are provided for a UE, and it is possible to realize control such as switching from a currently used slice to a standby slice when the UE moves outside a service area of the currently used slice, switching a slice at the timing of a handover message, or the like.

However, in the current 3GPP standards, a service provider's application that communicates with a UE cannot select a slice for the UE's communication from outside a core network, even via the NEF. In other words, application-initiated slice switching is not possible. If the above application cannot dynamically specify a network slice, there is a risk that the quality of communication between the UE and the application deteriorates, communication throughput decreases, or the overall system throughput cannot be improved. In such a case, it may become difficult for the service provider to provide appropriate services.

Therefore, the inventors conceived of a control system and a control method for dynamically selecting an appropriate slice from the application side.

### <System Configuration>

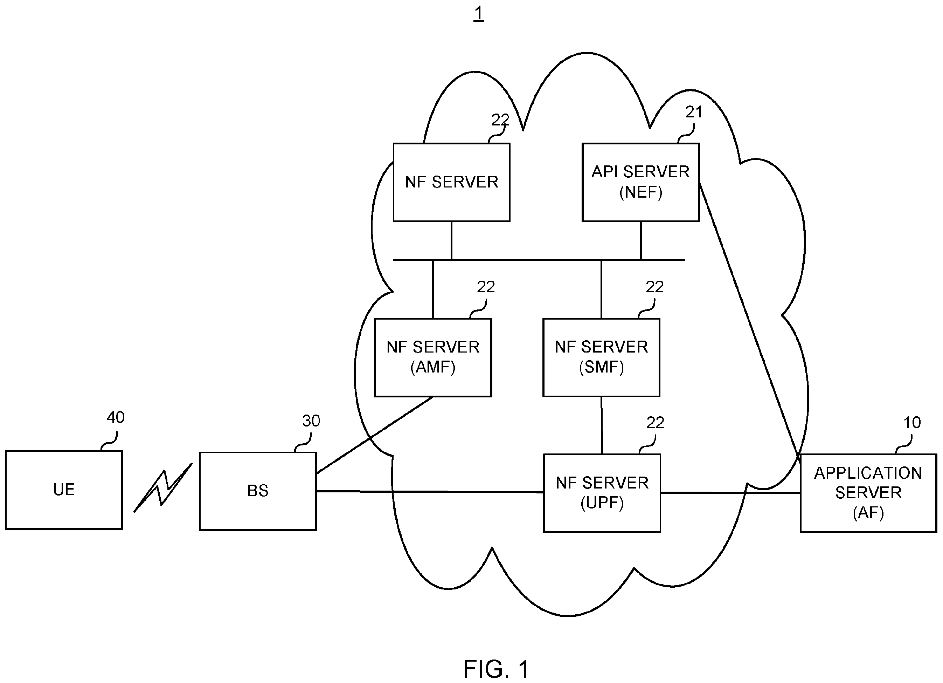

Fig. 1 is a diagram showing an example of a schematic configuration of a system according to one embodiment of the present disclosure. A system 1 includes an application server 10, an application programming interface (API) server 21, a network function (NF) server 22, a base station (BS) 30, and a user equipment (UE) 40. The system 1 may also be referred to as a wireless communication system, an information communication system, or the like.

In the present disclosure, an NF includes, for example, at least one of an Application Function (AF), an Access and Mobility Management Function (AMF), a Data Network (DN), a Location Management Function (LMF), a Network Exposure Function (NEF), a Network Slice Selection Function (NSSF), Network Data Analytics Function (NWDAF), Operation, Administration, and Maintenance (Management) (OAM), a Policy Control Function (PCF), a Session Management Function (SMF), Unified Data Management (UDM), a User Plane Function (UPF), or the like. Note that these are merely examples, and it should be understood that NFs other than these are also covered by the present disclosure.

The system 1 is, for example, a system compliant with a 3GPP Technical Specification (TS). More specifically, the system 1 may be a system compliant with a TS for a 5th Generation Mobile Communication System (5G) or New Radio (NR).

Note that the system 1 is not limited to this example and may include systems utilizing a wireless communication method such as Long Term Evolution (LTE), LTE-Advanced (LTE-A), 4th Generation Mobile Communication System (4G), 5th Generation Mobile Communication System (5G), 6th Generation Mobile Communication System (6G), xth Generation Mobile Communication System (xG (x is an integer or a decimal number, for example)), New Radio (NR), Global System for Mobile Communications (GSM (Registered Trademark)), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), and other wireless communication methods, as well as next-generation systems expanded, modified, created, or specified based on these.

In other words, terms related to 5G in the present disclosure may be used interchangeably with terms of other technologies or systems. Furthermore, when such replacement is made, for example, it should be understood by those skilled in the art that, for example, an NF may be used interchangeably with a function corresponding to that of an NF in 5G.

In the system 1, a communication link directed toward (received by) the BS 30 or originated from (transmitted by) the UE 40 may be referred to as an uplink (UL), and a communication link originated from (transmitted by) the BS 30 or directed toward (received by) the UE 40 may be referred to as a downlink (DL).

The application server 10 is a server that executes, controls, and manages applications for communicating with the UE 40. The application server 10 may correspond to the above-described AF as defined for a 5G core network (5GC). In the present disclosure, the application server 10, the application, the AF, and the like may be used interchangeably. Note that the application server 10 belongs to a network outside the 5GC.

The 5GC may include, for example, an optical fiber network. In the present disclosure, the 5GC, the network, the physical network, and the core network may be used interchangeably.

The API server 21 provides an API to enable external access to 5GC services (NFs, particularly control NFs). Through the API, for example, a service provider that is not a telecommunications carrier can, when providing a service related to the UE 40 using communications, request and obtain information regarding the location/status of the UE 40, or specify service quality (such as communication speed) for the UE 40. The API server 21 may correspond to the above-described NEF defined for the 5GC. In the present disclosure, the API server 21 and the NEF may be used interchangeably.

The NF server 22 provides at least one function of the above-described NF. In Fig. 1, the NF server 22 that is connected to the BS 30 to provide the AMF, the NF server 22 that provides the SMF, the NF server 22 that is connected to the BS 30, the SMF, and the AF (in the specific example, through the DN) to provide the UPF, and the like are shown. In the present disclosure, the NF server 22 and the NF (other than the NEF, such as the AMF, the NSSF, the PCF, and the SMF, for example) may be used interchangeably.

Note that in the present disclosure, for the sake of convenience, the API server 21 is distinguished from the NF server 22, but it is well known that the NEF is also one type of NF, and the API server 21 may be included within the NF server 22. In other words, the API server 21 and one or more NF servers 22 may correspond to a single server.

The BS 30 provides a radio access network (RAN) to the UE 40. An area where radio communication is possible within the radio access network is also referred to as a cell. In the present disclosure, the BS and the (radio) access network ((R)AN) may be used interchangeably.

The BS 30 is, for example, a gNB. The gNB provides NR user plane and control plane protocol terminations towards the UE, and is connected to the 5GC via an NG interface. The BS 30 may be an en-gNB. The en-gNB provides the NR user plane and control plane protocol terminations towards the UE, and operates as a secondary node in an E-UTRA-NR Dual Connectivity (EN-DC).

The UE 40 connects to the radio access network in the above-described cell. The UE 40 may be, for example, a mobile terminal (a mobile communication terminal) such as a smartphone, a tablet terminal, or a wearable terminal, or a fixed communication terminal. The UE 40 may be a device mounted on a moving object (e.g., a vehicle) which is a movable object, or the moving object itself.

Note that the apparatuses shown in Fig. 1 may be referred to as, respectively, a network node, a node, a [wired/wireless] communication apparatus, an information processing apparatus, or the like. Furthermore, the lines between the apparatuses in Fig. 1 indicate logical connection relationships and need not be physically directly connected (they may be indirectly connected via another apparatus).

### <Configuration of Each Apparatus>

An example of a configuration of each apparatus (the application server 10, the API server 21, the NF server 22, the BS 30, and the UE 40) according to the embodiment of the present disclosure will be described.

### <<Functional Configuration>>

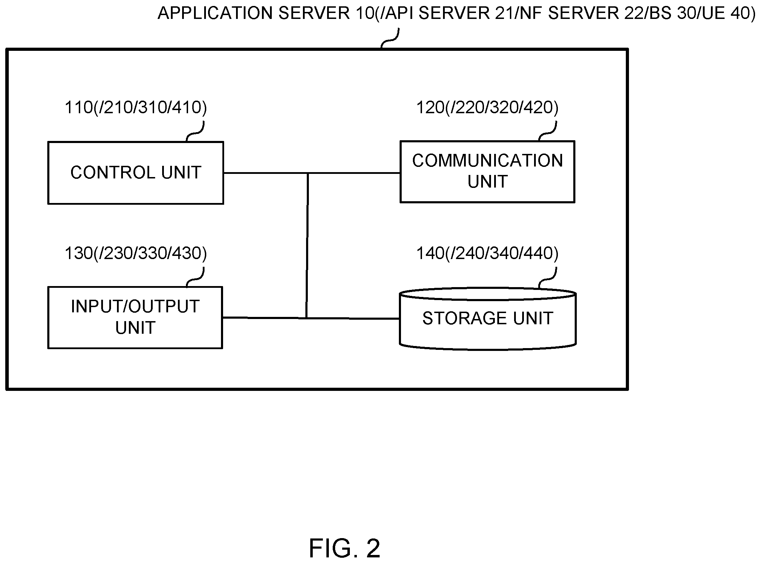

Fig. 2 is a diagram showing an example of a schematic functional configuration of each apparatus according to one embodiment of the present disclosure. For example, the application server 10 includes a control unit 110, a communication unit 120, an input/output unit 130, and a storage unit 140.

Note that the API server 21, the NF server 22, the BS 30, and the UE 40 may also include a similar functional configuration. For this reason, in Fig. 2, the reference signs for the functional blocks corresponding to respective apparatuses are shown by replacing the highest-order digit of the reference sign indicating each apparatus (for example, "3" in the highest-order digit of "30" for the BS 30) with "1". In the following, the functional blocks related to the application server 10 will be described, but it should be understood that similar descriptions apply to the other apparatuses.

In the present example, the functional blocks of the characteristic parts in the present embodiment are mainly shown, and each apparatus may include other functional blocks necessary for other processing. Furthermore, the configuration may omit certain functional blocks.

The control unit 110 controls the application server 10 and provides various functions. For example, the control unit 110 may control communication with other apparatuses via the communication unit 120. In addition, the control unit 110 may acquire information necessary for processing based on information received via the communication unit 120. The control unit 110 may also be referred to as a processing unit.

The communication unit 120 performs communication (transmission/reception) with other apparatuses via wired or wireless connection. The communication unit 120 may obtain information from received signals and output the information to the control unit 110, or convert information input from the control unit 110 into signals and transmit the signals. The communication unit 120 may also be referred to as a transmission unit, a reception unit, or a transmission and reception unit.

The input/output unit 130 may include an input unit that receives input through a person operation. The input unit may be connected to a given device, a storage medium, or the like, and receive data input. The input unit may output an input result to the control unit 110, for example.

Furthermore, the input/output unit 130 may include an output unit that outputs data, content, and the like in a form perceptible to a person. The output unit may be configured to include a display unit that displays images, a sound output unit that outputs sound, and the like.

The storage unit 140 stores (holds) various types of information utilized by the application server 10 for processing. The control unit 110 may instruct the storage unit 140 to read or write data.

### <<Hardware Configuration>>

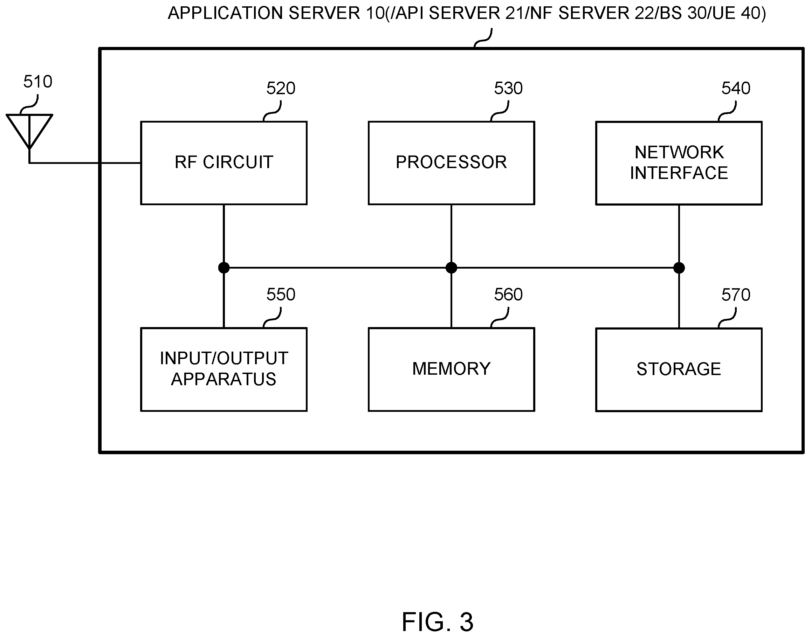

Fig. 3 is a diagram showing an example of a schematic hardware configuration of each apparatus according to one embodiment of the present disclosure. Each apparatus includes an antenna 510, a radio frequency (RF) circuit 520, a processor 530, a network interface 540, an input/output apparatus 550, a memory 560, and a storage 570.

Note that the hardware configuration of each apparatus may be configured to include one or more of the elements shown in Fig. 3, or may be configured not to include some elements. For example, the UE 40 does not need to include the network interface 540.

The antenna 510 converts signals into radio waves and radiates the radio waves into space. Furthermore, the antenna 510 receives radio waves in space and converts the radio waves into signals. The antenna 510 may be mounted in plurality, may include a transmission antenna and a reception antenna, or may include a single antenna for transmission and reception. The antenna 510 may include a directional antenna or may include a plurality of antenna elements.

The RF circuit 520 performs analog processing of signals transmitted and received via the antenna 510. The RF circuit 520 may include a filter (e.g., a highfrequency filter, a low-pass filter), an amplifier, a modulator, a frequency synthesizer, an analog-to-digital conversion circuit, a digital-to-analog conversion circuit, a Fast Fourier Transform (FFT)/Inverse FFT (IFFT) processing circuit, and the like.

The RF circuit 520 may perform amplification, filter processing, demodulation to a baseband signal, and the like on received signals in a radio frequency band, and output them to the processor 530. The RF circuit 520 may perform modulation to the radio frequency band, filter processing, amplification, and the like on the baseband signals, and transmit the signals in the radio frequency band via the transmission/reception antenna 510. Note that the RF circuit 520 may perform processing of a physical layer (e.g., processing of lower-level functions of the physical layer), or may perform beamforming processing such as analog beamforming processing, digital beamforming processing, and the like.

The processor 530 may control the entire apparatus. The processor 530 may read a program (a program code), software (software modules), data, and the like from the storage 570 into the memory 560, and perform various processing in accordance therewith. For example, the processor 530 may execute a program of an operating system (OS) loaded into the memory 560 to perform control.

The processor 530 may include a central processing unit (CPU) including interfaces with peripheral devices, a control apparatus, an arithmetic apparatus, registers, and the like. In addition, the processor 530 may include a microprocessor, a digital signal processor (DSP), an application specific integrated circuit (ASIC), a programmable logic device (PLD), a field programmable gate array (FPGA), and the like.

The processor 530 may perform digital processing of signals transmitted and received via the antenna 510 and the RF circuit 520. The digital processing may include processing of the physical layer (e.g., processing of higher-level functions of the physical layer), processing of layers above a medium access control (MAC) layer, and processing such as modulation, demodulation, encoding, decoding, and scrambling. The processor 530 performs processing of signals transmitted and received via the network interface 540.

The processor 530 may include a plurality of processors, or may be a single processor. The plurality of processors may include a baseband processor that performs the above-described digital processing, and one or more processors that perform other processing (e.g., overall control).

The network interface 540 may be a network adapter, for example, and may be connected to an external network via a wired connection to transmit and receive signals.

Note that the RF circuit 520/the baseband processor/the network interface 540 may be integrated. The RF circuit 520/the baseband processor/the network interface 540 may also be referred to as a network controller, a network card, a communication module, or the like.

The input/output apparatus 550 includes an input apparatus that receives input from the outside (e.g., a keyboard, a mouse, a microphone, a switch, a button, a sensor, and the like), an output apparatus that provides output to the outside (e.g., a display, a speaker, a light emitting diode (LED) lamp, and the like), an apparatus integrating these (e.g., a touch panel), or the like.

The memory 560 is a computer-readable non-transitory recording medium, and stores programs executed by the processor 530, parameters related to the programs, and various other information. The memory 560 may include at least one of a read-only memory (ROM), an erasable programmable ROM (EPROM), an electrically erasable programmable ROM (EEPROM), a random access memory (RAM), or a flash memory. All or part of the memory 560 may be included in the processor 530. The memory 560 may also be referred to as a register, a cache, a main memory (a main storage device), or the like.

The storage 570 is a computer-readable non-transitory recording medium, and stores various types of information. The storage 570 may include, for example, at least one of a flexible disk, a floppy (Registered Trademark) disk, a magneto-optical disk (e.g., a compact disc ROM (CD-ROM)), a digital versatile disc, a Blu-ray (Registered Trademark) disc, a removable disk, a hard disk drive (HDD), a smart card, a flash memory device (e.g., a solid state drive (SSD)), or the like. The storage 570 may also be referred to as an auxiliary storage device.

Furthermore, each apparatus, such as the processor 530 and the memory 560, may be connected by a bus for communicating information. A single bus may be used within an apparatus, or different buses may be used for each apparatus.

The control unit X10 (X = 1, 2, 3, 4, the same applies hereinafter) may be implemented by the processor 530. The communication unit X20 may be implemented by the antenna 510, the RF circuit 520, or the network interface 540. The input/output unit X30 may be implemented by the input/output apparatus 550. The storage unit X40 may be implemented by the memory 560/the storage 570.

Note that the BS 30 may be separated into three elements of a radio unit (RU), a distributed unit (DU), and a central unit (CU). The RU implements RF processing and the lower-level functions of the physical layer. The DU implements the higher-level functions of the physical layer, functions of the MAC layer, and functions of a radio link control (RLC) layer. The CU implements functions of a packet data convergence protocol (PDCP) layer, a service data adaptation protocol (SDAP) layer, and a radio resource control (RRC) layer.

In the present disclosure, the BS 30 may include one apparatus that implements all functions of the RU, the DU, and the CU, or may include a plurality of apparatuses that respectively implement some of the functions of the RU, the DU, and the CU.

Furthermore, other apparatuses in the present disclosure may be implemented by a plurality of apparatuses physically separated. Conversely, a plurality of different apparatuses in the present disclosure (e.g., two or more of the API server 21, the NF server 22, and the BS 30) may be implemented as a single apparatus.

### <Operational Example>

Hereinafter, an example of operations of the respective apparatuses and functions according to the embodiment of the present disclosure will be described. The communication method (a wireless communication method, a control method) described below may be applied to the above-described system 1.

Note that in the following description of the present disclosure, reference signs may be omitted. For example, a UE in the following description may refer to the UE 40.

Each apparatus/function in the following description may be interpreted as one or more functional blocks in the apparatus/function (e.g., the control unit 110, the communication unit 120) or a hardware configuration (e.g., the RF circuit 520, the processor 530).

### <<Slice Switching Triggered by Instruction from Application>>

In one embodiment of the present disclosure, the 5GC dynamically switches a slice that accommodates traffic between the UE and an application server (AF) based on an instruction from an application running on the AF. This allows the application side to dynamically select an appropriate slice.

This application may be an application for controlling or monitoring a moving object (e.g., a vehicle) in which the UE or a person holding the UE is riding (or the UE is mounted). For example, this application may obtain and output video/audio/information around the above-described moving object via the UE (e.g., the UE transmits data of the video/the audio/the information collected by a camera, a sensor, a microphone, or the like mounted on the UE/the moving object, and the AF receives the data through the DN), or perform a remote operation of the moving object (e.g., the AF transmits control signals for the moving object through the DN and the UE). Needless to say, this application may include other functions (e.g., video streaming to the UE).

In the following description, the slice may refer to a slice that accommodates traffic between the UE and the AF, a slice utilized for communication between the UE and the AF, or the like. Note that the traffic may be communicated through at least one of the BS, the UPF, the DN, or the like. In the present disclosure, switch, re-accommodate, update, replace, modify, transfer/migrate, and the like are interchangeable.

Furthermore, in the present disclosure, the UE may be a UE mounted on the moving object as described above, or may be a UE included in the moving object (held by a person riding the moving object).

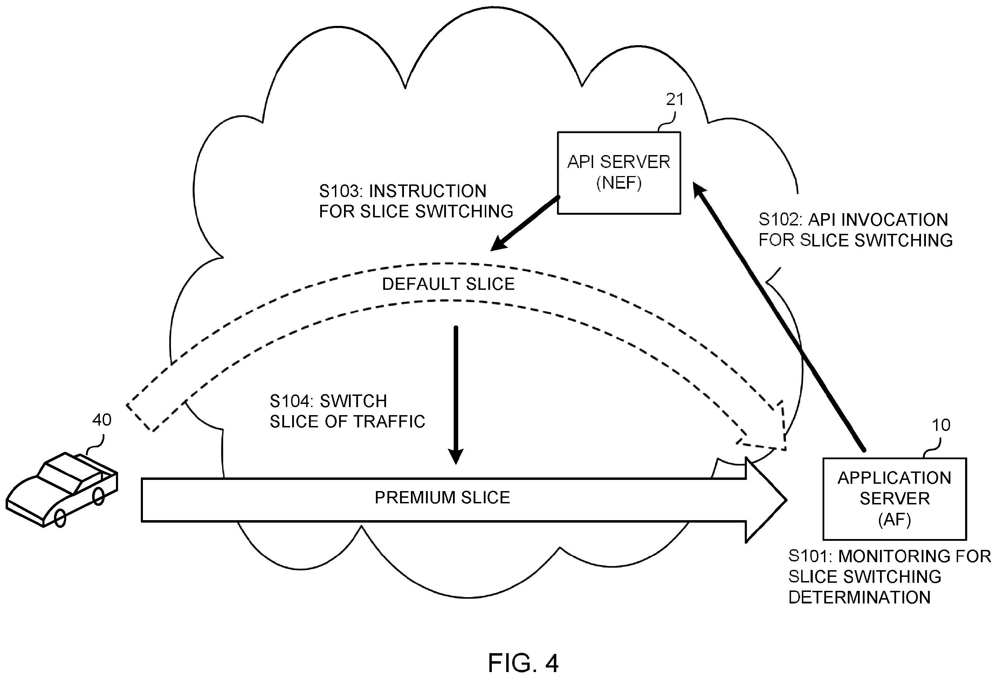

Fig. 4 is a diagram showing an example of slice switching triggered by an instruction from an application according to one embodiment of the present disclosure. In the example, switching from an original slice (which may also be referred to as a default slice, a base slice, or the like) to a slice with higher communication quality and/or higher speed (a premium slice) is shown. In the present disclosure, a [communication] quality/speed/latency may be used interchangeably with a [communication] performance.

In step S101, the AF monitors (determines) whether a condition for slice switching is met, and if the condition is met, the process proceeds to step S102. The above-described condition may be specified based on at least one of time, area, quality, UE location/speed, information notified by the 5GC, information notified by the UE, or the like.

The above-described condition may, for example, include any one or more of the following conditions:
- A specific time has been reached, or a current time falls within a specific time period,
- The UE has entered a specific area, exited a specific area, or is located within a specific area,
- Communication throughput/communication quality between the UE and the AF is at or below a threshold, or has fluctuated beyond a threshold (in other words, for example, an image quality of still images or moving images uploaded from the UE has deteriorated),
- Fluctuations in the UE's location/speed/acceleration are below a threshold (in other words, the moving object including the UE is hardly moving),
- Specific information is transmitted from the UE (e.g., the moving object including the UE therein transfers a message indicating difficulty in autonomous driving via the UE), and
- A specific operation (e.g., an operation of a specific button/a menu) occurred within the application.

The above-described specific time may be identified based on at least one of a start time, an end time, a duration from the start time, a periodicity, an offset [of the periodicity from a specific time point], or the like. The unit of time may be expressed, for example, in seconds, minutes, or hours.

The above-described specific area may be indicated by at least one of a range of latitudes and longitudes [from a reference point], a distance [from the reference point], a geographical area, a tracking area (TA), or the like, or may be predefined in the AF/application. The above-described specific area may be determined based on at least one of the reference point, the range of latitude and longitude [from the reference point], the distance [from the reference point], an address/a shape indicating the geographical area, [a list of] tracking area identities (TAIs), a public land mobile network (PLMN) ID, an area identifier (ID) predefined in the AF/application, or the like. The above-described reference point may be preset in the AF/application or may be a current location of the UE.

Meeting of the above-described condition may mean that the above-described condition is met once, or that the condition is met over a certain period or a certain number of times. For example, the AF includes a counter. Once the above-described condition is met at a certain timing, the counter may be incremented each time the above-described condition is met at specific intervals. If the counter exceeds a threshold within a certain period from the certain timing, the process proceeds to step S102, otherwise, the AF may reset the counter (or set the counter to zero).

Note that the AF may determine whether the above-described condition is met based on information acquired from [the NEF of] the 5GC/the application. For example, the AF may acquire (receive) information regarding the UE/the communication quality via the API for NEF services such as Nnef_EventExposure and Nnef_AnalyticsExposure, and determine whether the above-described condition is met based on this.

The Nnef_EventExposure is a service for notifying events. Such events include at least one of UE reachability, loss of connectivity, location reporting, the number of UEs present within the geographic area, or the like. The Nnef_AnalyticsExposure is a service for notifying statistical information regarding networks. For example, the statistical information includes at least one of information on performance, information on quality of service (QoS), congestion information, or the like.

The above-described condition may differ for each slice (S-NSSAI) or slice and service type (SST). For example, the above-described condition may differ for a slice for enhanced mobile broadband (eMBB), a slice for massive machine type communication (mMTC), and a slice for ultra-reliable and low-latency communications (URLLC). Different conditions may be applied for each specific component of the above-described conditions (e.g., the time, the area to which the UE belongs, communication throughput/communication quality between the UE and the AF, the UE's location, and the like). For example, the above-described condition may differ depending on whether the UE belongs to a first area or a second area.

In step S102, the AF may transmit an instruction for slice switching to [the NEF of] the 5GC when one or more of the above-described conditions are met. Transmission of the instruction for the slice switching may be performed by invoking a specific service operation. For example, the AF may invoke the specific service operation, update [information included in] a request, and transmit the request to the NEF. The request may correspond to the instruction for the slice switching. In the present disclosure, the instruction, the indication, the request, and the like may be used interchangeably.

In the present disclosure, service operations, the API [for the service operations], the interface [for the service operations], and the like may be used interchangeably.

The above-described specific service operation may include an existing service operation (e.g., Nnef_ServiceParameter_Update) or a new service operation (e.g., a new NEF service not specified in the existing NEF service). Invocation of the above-described specific service operation may be made via a CAMARA API (e.g., a Quality on Demand (QoD) API) related to a global system for mobile communications (GSM) association (GSMA).

The instruction for the slice switching may include one or more of the following pieces of information:
- Information indicating a slice before switching (a switching target),
- Information indicating a slice after switching (a switching destination),
- Information indicating the UE [utilizing the slice of the switching target] (which may also be referred to as UE identification information, UE information, and the like), and
- Information related to timing for switching slices (which may also be referred to as timing information).

The information indicating the slice before switching (switching target) may, for example, be Single Network Slice Selection Assistance Information (S-NSSAI). The information indicating the slice after switching may, for example, be alternative S-NSSAI.

Note that in the current Rel. 18 3GPP standards (Non-Patent Literature 1), the alternative S-NSSAI is defined to indicate a compatible S-NSSAI for an S-NSSAI within the Allowed NSSAI that the AMF uses to replace the S-NSSAI when the S-NSSAI is unavailable or congested. The alternative S-NSSAI in the present disclosure may be defined by interchanging "when the S-NSSAI is unavailable or congested" in the above-described definition with "when the S-NSSAI is unavailable or congested, or is specified to be switched [via the NEF]". The alternative S-NSSAI in the present disclosure may also be referred to as an indicated S-NSSAI, or the like.

The UE information may include at least one of the following:
- Generic Public Subscription Identifier (GPSI),
- Subscription Permanent Identifier (SUPI),
- Internet Protocol Version 4 (IPv4) address,
- Internet Protocol Version 6 (IPv6) address or IPv6 prefix,
- MAC address,
- External Group Identifier,
- Internal Group Identifier, and
- Any other identifier for identifying the UE.

Note that when the UE information is an external (unique) ID that differs from a 3GPP domain ID (e.g., GPSI) (managed under the 5GS), the AF/NEF may have information regarding mapping (correspondence) between the 3GPP domain ID and the external ID. The UE information below may be used interchangeably with the UE information converted into the 3GPP domain ID by the NEF or another NF.

The timing information may indicate any one or more of the following:
- switching immediately,
- switching when a specific time is reached (or during a specific time), and
- switching when the UE enters a specific area, or exits a specific area, or is within a specific area.

The timing information may include information regarding at least one of a start time, an end time, a duration from the start time, a periodicity [of the switching], an offset [of the periodicity from a specific time point], or the like, as information indicating the above-described specific time. The unit of time may be expressed, for example, in seconds, minutes, or hours.

The above-described specific area may be indicated by at least one of a range of latitude and longitude [from a reference point], a distance [from the reference point], a geographical area, a TA, or the like, or may be predefined in the AF/the application. The timing information may include information regarding at least one of the reference point, the range of latitude and longitude [from the reference point], the distance [from the reference point], an address/a shape indicating the geographical area, [a list of] TAIs, a PLMN ID, an area ID predefined in the AF/application, or the like, as information indicating the above-described specific area. The above-described reference point may be preset in the AF/application or may be a current location of the UE.

Note that the above-described specific time/the above-described specific area in step S103 may differ in part or in whole from the above-described specific time and the above-described specific area in step S101, or may be the same in part or in whole.

The timing for switching slices may correspond to timing at which all conditions regarding the time and the area indicated by the above-described timing information are met. As described above regarding step S101, meeting a condition may mean that the condition is met once, or that the condition is met over a certain period or a certain number of times.

Note that the fact that the above-described instruction does not explicitly include the information regarding the timing for switching slices may imply that the switching is made at a default timing (e.g., immediately).

When generating an instruction for slice switching, the AF may determine at least one of the slice after switching, timing for switching slices, or the like based on information obtained from [the NEF of] the 5GC/the application. Obtaining the information may be the same as described in step S101. For example, the AF may obtain information regarding the [alternative] S-NSSAI and the performance (e.g., a communication speed, a quality, or the like) of the slice corresponding to the [alternative] S-NSSAI.

Note that the AF may set/notify/store information of available S-NSSAIs (or allowed NSSAIs) in advance. The information may be set/notified by the telecommunications carrier operating the 5GC. The AF may select an alternative S-NSSAI indicating a slice after switching from among the available S-NSSAIs (or the allowed NSSAI).

In step S103, the NEF transmits information regarding the slice switching to nodes related to the slice (instructing the slice switching). The information regarding the slice switching may include one or more pieces of information included in the above-described instruction for the slice switching. In step S104, the nodes perform control for switching slices based on the information regarding the slice switching. Note that the NEF/node may determine start timing of processing related to the slice switching (e.g., information transmission to another node) based on the time/area indicated by the timing information, and start the above-described processing at the start timing. This allows the AF to perform the processing of the slice switching based on the desired time/area.

Although not shown in the drawings, in step S105, the above-described node may transmit a report regarding results of the slice switching (e.g., success, failure, or the like) to the NEF. In step S106, the NEF may transmit a report regarding the results of the slice switching to the AF.

Note that if the condition is met after the slice switching, the above-described node may perform control to revert to the original slice (default slice). The above-described condition may include, for example, a certain amount of time having elapsed after the switching. Furthermore, the above-described condition may include the AF transmitting an instruction to revert the switched slice to [the NEF of] the 5GC. Whether or not to transmit the instruction to revert the switched slice may be determined in the same manner (though under different rules) as the condition for the slice switching in step S101.

Fig. 4 shows an example in which the slice of the switching destination has better communication quality/higher speed than that of the original slice, but the slice of the switching destination need not have better communication quality/higher speed than that of the original slice. For example, if the communication quality/throughput between a given UE and an AF is sufficiently good for control/monitoring of the moving object on which the UE or a person holding the UE is riding (or the UE is mounted), switching to a slice with lower but acceptable quality or speed may be controlled. In this case, considering a case where a new UE that requires higher-quality/higher-speed communication starts communication, network resources can be reserved.

According to the slice switching procedure described above, an appropriate slice can be dynamically/explicitly selected from the application side. For example, in a case where a UE located inside a vehicle that normally operates in autonomous driving uploads (streams) moving images captured by cameras around the vehicle to an AF, and in an emergency, the vehicle switches to a remote control (remote driving) mode, allowing a person to remotely operate the vehicle while viewing the moving images on an application in the AF, the AF can specify switching to the premium slice based on a deterioration in communication quality, thereby enabling a stable remote operation (reducing human operational errors).

Furthermore, in the above-described case, since the AF can specify switching such that the UE uploads data via the default slice during the autonomous driving and the UE uploads data via the premium slice when autonomous driving becomes difficult, the remote operation can be performed stably (reducing human operational errors).

Furthermore, when an application streams moving images to the UE, since the AF can specify switching to the premium slice based on a deterioration in communication quality, high-quality moving images can be stably delivered to the UE.

### <<First Control Flow of Slice Switching>>

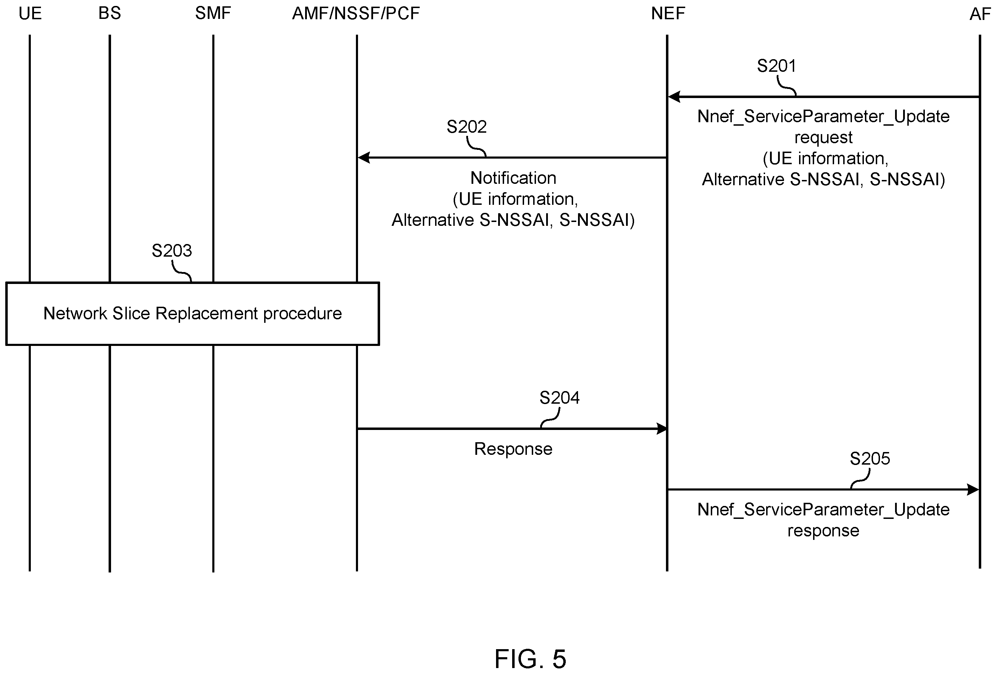

Fig. 5 is a diagram showing an example of a first control flow of the slice switching according to one embodiment of the present disclosure. The present example corresponds to step S102 and subsequent steps described above.

In step S201 (corresponding to step S102), the AF transmits a request for the Nnef_ServiceParameter_Update service operation to the NEF. The request may include the S-NSSAI indicating the slice before switching (switching target), the alternative S-NSSAI indicating the slice after switching, and the UE information.

In step S202 (corresponding to step S103), the NEF transmits information (a notification) regarding the slice switching to the AMF/NSSF/PCF. The notification may include the above-described S-NSSAI, the above-described alternative S-NSSAI, and the above-described UE information. Note that at least one of the S-NSSAI or the UE information need not be included in the notification.

In step S203 (corresponding to step S104), the AMF/NSSF/PCF performs control to switch a slice that accommodates traffic between the UE indicated by the UE information and the AF from a slice associated with the S-NSSAI to a slice associated with the alternative S-NSSAI (in other words, triggers replacement between these slices), based on the information (the notification) regarding the slice switching.

The slice switching (slice replacement procedure) in step S203 may be performed in the same manner as the procedure for the network slice replacement function used to replace the S-NSSAI with the alternative S-NSSAI, as described in the current Rel. 18 3GPP standards (e.g., §5.15.19 Support of Network Slice Replacement in Non-Patent Literature 1).

Note that in the current Rel. 18 3GPP standards, network slice replacement is triggered when the S-NSSAI becomes unavailable or congested (e.g., when the NSSF/PCF/OAM detects that the S-NSSAI becomes unavailable or congested), based on the transmission of a given notification ("network slice availability notification", "access and mobility-related policy notification", and the like) to the AMF. The given notification may include the alternative S-NSSAI that can be used to replace the S-NSSAI.

Note that the unavailability or congestion of the S-NSSAI may be detected based on the output of the OAM or the NWDAF.

Upon receiving the given notification, the AMF may decide an alternative S-NSSAI, and provide the alternative S-NSSAI for the S-NSSAI to the UE registered with the S-NSSAI, or provide a mapping from the S-NSSAI to the alternative S-NSSAI. The AMF may transmit this information to the UE by including the information in a UE Configuration Update message, or the like. Until the mapping is deleted, the UE may perform communication using a slice associated with the alternative S-NSSAI instead of the S-NSSAI.

Furthermore, the AMF may provide both the S-NSSAI and the alternative S-NSSAI to the SMF (e.g., via a service operation related to a protocol data unit (PDU) session, such as Nsmf_PDUSession_UpdateSMContext). For example, regarding an existing PDU session associated with the S-NSSAI that is replaced by the alternative S-NSSAI, after transmitting the mapping to the UE, the AMF may transmit an update to the SMF indicating that the PDU session is to be transferred to [the slice associated with] the alternative S-NSSAI. The SMF may perform control to transfer the PDU session used by the BS, the UE, or the like to the slice associated with the alternative S-NSSAI.

Specifically, the AMF may transmit an Nsmf_PDUSession_UpdateSMContext request including an SM context ID, the S-NSSAI, the alternative S-NSSAI, and the like to the SMF of the PDU session associated with the S-NSSAI. The SMF may transmit an N4 session modification request message indicating that the S-NSSAI is replaced with the alternative S-NSSAI to the UPF. Furthermore, the SMF may transmit a PDU session modification command including at least one of the alternative S-NSSAI or a cause value indicating that the S-NSSAI of the PDU session is replaced with the alternative S-NSSAI (or that re-establishment of the PDU session in the alternative S-NSSAI is required) to the UE [via the AMF and the BS].

Note that the PDU session may refer to an association between the UE and a DN providing a PDU connection service.

In the current Rel. 18 3GPP standards, network slice replacement is triggered in a case where the S-NSSAI becomes unavailable or congested. On the other hand, in step S203, network slice replacement is triggered when the NEF transmits information (notification) regarding the slice switching to the AMF/NSSF/PCF, even when that case does not apply.

In step S204 (corresponding to step S105), the AMF/NSSF/PCF transmits a report regarding the results of the slice switching (success, failure, or the like) to the NEF. In step S205 (corresponding to step S106), the NEF transmits a report regarding the results of the slice switching to the AF. The reports regarding the results of the slice switching in steps S204 and S205 may differ (and may include different contents) or may be the same. The report regarding the results of the slice switching in step S205 may be a response to Nnef_ServiceParameter_Update.

According to the first control flow described above, control based on a slice switching instruction from the application can be performed in accordance with an existing network slice replacement procedure.

### <<Second Control Flow of Slice Switching>>

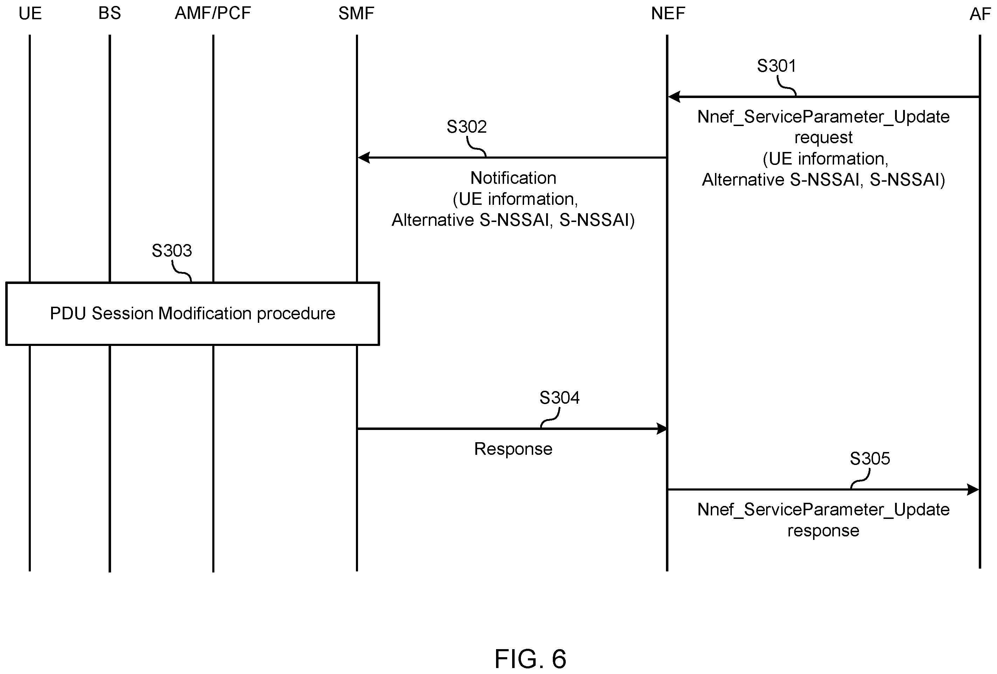

Fig. 6 is a diagram showing an example of a second control flow of the slice switching according to one embodiment of the present disclosure.

Since steps S301 and S305 may be the same as steps S201 and S205, respectively, the description thereof will not be repeated.

Steps S302 and S304 may be the same as steps S202 and S204, respectively, with the AMF/NSSF/PCF replaced by the SMF. Therefore, the description thereof will not be repeated.

In step S303, the SMF performs control to switch a slice that accommodates traffic between the UE indicated by the UE information and the AF from a slice associated with the S-NSSAI to a slice associated with the alternative S-NSSAI, based on information (a notification) regarding the slice switching from the NEF (in other words, triggers the replacement of these slices).

The slice switching in step S303 may be performed in the same manner as a PDU session modification procedure described in the current Rel. 18 3GPP standards (e.g., §4.3.3 PDU Session Modification in Non-Patent Literature 2).

For example, the SMF may transmit an N4 session modification request message indicating that the S-NSSAI is replaced with the alternative S-NSSAI to the UPF. Furthermore, the SMF may transmit a PDU session modification command including at least one of the alternative S-NSSAI or a cause value indicating that the S-NSSAI of the PDU session is replaced with the alternative S-NSSAI (or that re-establishment of the PDU session in the alternative S-NSSAI is required) to the UE [via the AMF and the BS].

Note that the SMF may report on subscribed events to the PCF [by performing an SM policy association modification procedure].

According to the second control flow described above, control based on the slice switching instruction from the application can be performed in accordance with an existing PDU session modification procedure.

### <<Case Where Specified Slice of Switching Destination is Unavailable>>

When a slice of the switching destination desired by the AF (the alternative S-NSSAI) is determined to be unavailable, [a node of] the 5GC may propose or utilize a slice of another switching destination (which may also be referred to as an additional alternative S-NSSAI, another alternative S-NSSAI, or the like) as a slice of the switching destination. Note that "unavailable" may be used interchangeably with "not available, not authorized for use, or congested". Furthermore, in the above-described network slice replacement procedure, the PDU session modification procedure, and the like, transmission of a report indicating that "the switching failed (the switching could not be performed)" to any NF node may correspond to the above-described "unavailable".

The slice of the additional alternative S-NSSAI may have performance [equal to or lower than that of the slice of the alternative S-NSSAI, and] equal to or higher than that of the slice associated with the original S-NSSAI.

For example, when the NEF, in coordination with the NSSF/PCF or the like, determines that the alternative S-NSSAI indicated by the instruction/request received in step S102/S201/S301 is unavailable, the NEF may omit the intermediate steps, and transmit a report indicating that the alternative S-NSSAI is unavailable to the AF in step S106/S205/S305 described above. Note that when the alternative S-NSSAI is unavailable but the NEF can identify an additional alternative S-NSSAI in coordination with the NSSF/PCF or the like, the NEF may notify the additional alternative S-NSSAI in the report.

When the AMF/NSSF/PCF/SMF determines that the alternative S-NSSAI indicated by the information/notification received in step S103/S202/S302 is unavailable, the AMF/NSSF/PCF/SMF may omit the intermediate steps and transmit a report indicating that the alternative S-NSSAI is unavailable to the NEF in step S105/S204/S304 described above. Note that when the alternative S-NSSAI is unavailable but the AMF/NSSF/PCF/SMF can identify an additional alternative S-NSSAI, the AMF/NSSF/PCF/SMF may notify the additional alternative S-NSSAI in the report. The NEF may transmit a report indicating that the alternative S-NSSAI is unavailable to the AF.

When the AF receives a report indicating an additional alternative S-NSSAI in step S106/S205/S305, the AF may set the additional alternative S-NSSAI as a slice of the switching destination (an alternative S-NSSAI), and transmit the instruction/request in step S102/S201/S301 described above again to the NEF. Note that a list (candidates) of the additional alternative S-NSSAIs may be notified in the report. In such a case, the AF may select one additional alternative S-NSSAI from the list, set the selected additional alternative S-NSSAI as a slice of the switching destination (an alternative S-NSSAI), and transmit the instruction/request in step S102/S201/S301 described above again to the NEF.

For example, the NEF may, in coordination with the NSSF/PCF or the like, determine that the alternative S-NSSAI indicated by the instruction/request received in step S102/S201/S301 is unavailable, and discover (decide) an additional alternative S-NSSAI.

The AMF/NSSF/PCF/SMF may determine [, in coordination with the NSSF/PCF or the like,] that the alternative S-NSSAI indicated by the information/notification received in step S103/S202/S302 described above is unavailable, and discover (decide) an additional alternative S-NSSAI.

If an additional alternative S-NSSAI is discovered, for subsequent steps, steps in which the above-described alternative S-NSSAI is replaced with the additional alternative S-NSSAI may be used. Note that the NEF may transmit a report indicating that the alternative S-NSSAI was unavailable [and therefore switched to the slice of the additional alternative S-NSSAI] to the AF.

According to the examples described above, even if the slice of the specified switching destination is unavailable, control based on the instruction for the slice switching from the application can be performed using a slice of another switching destination.

### <Supplementary Information>

In the above-described embodiment, the slice switching is instructed or controlled, but the scope of the present disclosure is not limited thereto. The slice in the above-described embodiment may be used interchangeably with a network slice instance (NSI)/a network slice subnet instance (NSSI). In this case, the S-NSSAI (including the S-NSSAI such as the alternative S-NSSAI) in the above-described embodiment may be used interchangeably with an NSI ID, an NSSI ID, and the like. In other words, the present disclosure may cover switching at a slice instance level/a slice subnet instance level.

### <Supplementary Notes>

With regard to one embodiment of the present disclosure, the following aspects are noted.

### [Note 1]

A communication apparatus (e.g., an application server 10) that communicates with a terminal (e.g., a UE 40), including:
a control unit that determines whether a condition for switching a logical network (e.g., a slice) between the terminal and the communication apparatus is met; and
a communication unit that, when the condition is met, transmits, to a second communication apparatus (e.g., an API server 21) for exposing a network function (NF) of a physical network (e.g., a 5GC) corresponding to the logical network to external entities, an instruction (e.g., a slice switching instruction) for switching the logical network to another logical network (e.g., another slice).

### [Note 2]

The communication apparatus according to Note 1, in which the condition includes reaching a specific time or falling within a specific time period.

### [Note 3]

The communication apparatus according to Note 1 or Note 2, in which the condition includes the terminal entering a specific area, exiting the specific area, or being located within the specific area.

### [Note 4]

The communication apparatus according to any one of Note 1 to Note 3, in which after transmitting the instruction, if the other logical network is unavailable, the communication unit receives information (e.g., an additional alternative S-NSSAI) indicating yet another logical network that is available from the second communication apparatus.

### [Note 5]

The communication apparatus according to any one of Note 1 to Note 4, in which the instruction includes information regarding timing (e.g., timing information) for switching the logical network slice to the other logical network.

### [Note 6]

A communication apparatus (e.g., an API server 21) including:
a reception unit that receives, from a second communication apparatus, an instruction (e.g., a slice switching instruction) for switching a logical network (e.g., a slice) between a terminal (e.g., a UE 40) and the second communication apparatus (e.g., an application server 10) to another logical network (e.g., another slice); and
a transmission unit that transmits information (e.g., an alternative S-NSSAI) indicating the other logical network to a third communication apparatus (e.g., AMF/NSSF/PCF/SMF).

### [Note 7]

The communication apparatus according to Note 6, in which the third communication apparatus triggers a procedure of a network slice replacement function (e.g., a procedure described in §5.15.19 Support of Network Slice Replacement in Non-Patent Literature 1) for switching the logical network to the other logical network based on the information indicating the other logical network.

### [Note 8]

The communication apparatus according to Note 6 or Note 7, in which the third communication apparatus triggers a protocol data unit (PDU) session modification procedure (e.g., a procedure described in §4.3.3 PDU Session Modification in Non-Patent Literature 2) for switching the logical network to the other logical network based on the information indicating the other logical network.

### [Note 9]

A communication method of a communication apparatus communicating with a terminal, comprising:
determining whether a condition for switching a logical network between the terminal and the communication apparatus is met; and
transmitting, to a second communication apparatus for exposing a network function (NF) of a physical network corresponding to the logical network to external entities, an instruction to switch the logical network to another logical network, when the condition is met.

### [Note 10]

A terminal (e.g., a UE 40) that communicates with a communication apparatus (e.g., an application server 10), including:
a communication unit that transmits specific information (e.g., a message indicating that autonomous driving of a moving object including the UE 40 therein is difficult); and
a control unit that, when condition for switching a logical network (e.g., a slice) between the terminal and the communication apparatus based on the specific information is met, controls so as to communicate with the communication apparatus using another logical network (e.g., another slice) instead of the logical network.

### [Note 11]

A communication system including the communication apparatus according to any one of Note 1 to Note 8 and the terminal according to Note 10.

### <Modification Example>

Note that terms described in the present disclosure and terms necessary for understanding the present disclosure may be used interchangeably with terms having identical or similar meanings.

In the present disclosure, wording such as apparatus, circuit, device, section, unit, and the like may be used interchangeably.

The information, parameters, and the like described in the present disclosure may be represented using absolute values, relative values from a given value, or corresponding other information. For example, a radio resource may be indicated by a given index.

The names used for parameters and the like in the present disclosure are not limiting in any respect. Furthermore, mathematical expressions and the like using these parameters may differ from those explicitly disclosed herein.

The information, signals, and the like described in the present disclosure may be represented using any of various different technologies. For example, the data, instructions, commands, information, signals, bits, symbols, chips, and the like that may be referred to throughout the above description may be represented by voltage, current, electromagnetic waves, magnetic fields or magnetic particles, a light field or photons, or any combination thereof.

Information, signals, and the like that have been input or output may be stored in a specific location (e.g., memory) or managed using a management table. Information, signals, and the like that have been input or output may be overwritten, updated, or appended. The output information, signals, and the like may be deleted. The input information, signals, and the like may be transmitted to other apparatuses.

Any information (e.g., information regarding any parameters or variables) described in the present disclosure may be notified between any apparatuses in the present disclosure. Furthermore, in the present disclosure, the notification of information is not limited to the aspects or embodiments described herein and may be performed using other methods.

Furthermore, the notification of given information (e.g., notification that "it is X") is not limited to explicit notification but may be performed implicitly (e.g., by not notifying the given information or by notification of other information).

Software should be broadly interpreted to mean instructions, instruction sets, code, code segments, program code, programs, subprograms, software modules, applications, software applications, software packages, routines, subroutines, objects, executable files, execution threads, procedures, functions, and the like, regardless of whether it is referred to as software, firmware, middleware, microcode, hardware description language, or by any other names.

Furthermore, software, instructions, information, and the like may be transmitted or received via a transmission medium. For example, when software is transmitted from a website, a server, or other remote source using at least one of wired technologies (such as coaxial cable, optical fiber cable, twisted pair, and digital subscriber line (DSL)) or wireless technologies (such as infrared and microwaves), at least one of these wired technologies or wireless technologies is included within the definition of a transmission medium.

In the present disclosure, "base station (BS)", "wireless base station", "relay station", "fixed station", "NodeB", "eNB (eNodeB)", "gNB (gNodeB)", "access point", "transmission point (TP)", "reception point (RP)", "transmission/reception point (TRP)", "panel", "cell", "sector", "cell group", "carrier", "component carrier", and the like may be used interchangeably.

In the present disclosure, terms such as "mobile station (MS)", "user terminal", "user equipment (UE)", "terminal", and the like may be used interchangeably.

Any apparatus in the present disclosure may be referred to as a server, an apparatus, a transmission apparatus, a reception apparatus, a wireless communication apparatus, an information processing apparatus, and the like, and these terms may be used interchangeably. Any apparatus in the present disclosure may be a device mounted on a moving object which is a movable object, a device included in the moving object (for example, held by a person riding in the moving object), or the moving object itself. The moving object may include, for example, vehicles, transport vehicles, automobiles, motorcycles, bicycles, connected vehicles, excavators, bulldozers, wheel loaders, dump trucks, forklifts, trains, buses, carts, rickshaws, ships and other watercraft, airplanes, rockets, satellites, drones, multicopters, quadcopters, balloons, and objects mounted thereon, but is not limited thereto. Furthermore, the moving object may perform autonomous traveling or automatic driving. Note that the moving object in the present disclosure may be used interchangeably with an object that does not move (e.g., an object that does not move but can be ridden by a person).

The respective aspects and embodiments described in the disclosure may be used alone, in combination, or switched therebetween during execution. Furthermore, processing procedures, sequences, flowcharts, and the like of the respective aspects and embodiments described in the present disclosure may be rearranged, provided there is no contradiction. For example, with regard to the methods described in the present disclosure, various elements of the steps are presented using an illustrative order and are not limited to the presented specific order.

Unless otherwise explicitly stated, the phrase "based on" used in the present disclosure does not mean "based only on". In other words, the phrase "based on" means both "based only on" and "based at least on".

Any reference to elements using designations such as "first", "second", or the like as used in the present disclosure does not generally limit the number or order of those elements. These designations may be used in the present disclosure as a convenient means of distinguishing between two or more elements. Therefore, references to the first and second elements do not mean that only two elements may be employed or that the first element must in some way precede the second element.

The terms "connected", "coupled" or any variations thereof, as used in the present disclosure, mean any direct or indirect connection or coupling between two or more elements and may include the existence of one or more intermediate elements between two elements that are "connected" or "coupled" to each other. The coupling or connection between elements may be physical, logical, or a combination thereof. The coupling or connection between elements may be via at least one of wired or wireless connection.

In the present disclosure, the term "A and B differ" may mean that "A and B differ from each other". Note that the term may mean that "A and B each differ from C". The terms such as "separated" and "coupled" may also be interpreted in the same manner as "differ".

In the present disclosure, when the terms "include", "including", and variations thereof are used, these terms are intended to be inclusive, similar to the term "comprising". Furthermore, the term "or" used in the present disclosure is intended not to be an exclusive OR (XOR).

In the present disclosure, for example, if an article is added due to translation, such as "a", "an", and "the" in English, the present disclosure may include cases where a noun following such articles is in the plural form.

In the present disclosure, wordings related to "decision", "judgment", "determination", "selection", "calculation", "computation", "processing", "derivation", "search", "confirmation", "assumption", "expectation", and the like may be used interchangeably.

In the present disclosure, terms such as "or less", "less than", "or more", "more than", and "equal to" may be used interchangeably. Furthermore, wordings meaning "good", "bad", "large", "small", "high", "low", "fast", "slow", "wide", "narrow" and the like may be used interchangeably, not limited to the positive, comparative, and superlative forms. Furthermore, in the present disclosure, wordings meaning "good", "bad", "large", "small", "high", "low", "fast", "slow", "wide", "narrow" and the like may be used interchangeably not only between the positive, comparative, and superlative forms but also as expressions prefixed with "i-th" (where i is any integer) (for example, "highest" may be used interchangeably with an expression such as "i-th highest").

In the present disclosure, terms such as "of", "for", "regarding", "related to", "associated with", and the like may be used interchangeably.

Although the invention according to the present disclosure has been described in detail above, it will be apparent to those skilled in the art that the invention according to the present disclosure is not limited to the embodiments described herein. The description of the present disclosure is intended to be illustrative and does not impose any limitations on the invention according to the present disclosure.

This application is based on Japanese Patent Application No. 2023-220630, filed on December 27, 2023, the entire contents of which are incorporated herein by reference.

## Claims

1. A communication apparatus that communicates with a terminal, comprising:
a control unit that determines whether a condition for switching a logical network between the terminal and the communication apparatus is met; and
a communication unit that, when the condition is met, transmits, to a second communication apparatus for exposing a network function (NF) of a physical network corresponding to the logical network to external entities, an instruction to switch the logical network to another logical network.

2. The communication apparatus according to claim 1, wherein the condition includes reaching a specific time or falling within a specific time period.

3. The communication apparatus according to claim 1, wherein the condition includes the terminal entering a specific area, exiting the specific area, or being located within the specific area.

4. The communication apparatus according to any one of claims 1 to 3, wherein after transmitting the instruction, if the other logical network is unavailable, the communication unit receives information indicating yet another logical network that is available from the second communication apparatus.

5. The communication apparatus according to any one of claims 1 to 3, wherein the instruction includes information regarding timing for switching the logical network slice to the other logical network.

6. A communication apparatus comprising:
a reception unit that receives, from a second communication apparatus, an instruction to switch a logical network between a terminal and the second communication apparatus to another logical network; and
a transmission unit that transmits information indicating the other logical network to a third communication apparatus.

7. The communication apparatus according to claim 6, wherein the third communication apparatus triggers a procedure of a network slice replacement function for switching the logical network to the other logical network based on the information indicating the other logical network.

8. The communication apparatus according to claim 6, wherein the third communication apparatus triggers a protocol data unit (PDU) session modification procedure for switching the logical network to the other logical network based on the information indicating the other logical network.

9. A communication method of a communication apparatus communicating with a terminal, comprising:
determining whether a condition for switching a logical network between the terminal and the communication apparatus is met; and
transmitting, to a second communication apparatus for exposing a network function (NF) of a physical network corresponding to the logical network to external entities, an instruction to switch the logical network to another logical network, when the condition is met.

10. A terminal that communicates with a communication apparatus, comprising:
a communication unit that transmits specific information; and
a control unit that, when a condition for switching a logical network between the terminal and the communication apparatus based on the specific information is met, controls so as to communicate with the communication apparatus using another logical network instead of the logical network.

11. A communication system comprising the communication apparatus according to claim 1 and the terminal according to claim 10.
